# EUROPEAN PATENT APPLICATION

(11) **EP 2 676 861 A2**
(43) Date of publication of application: **25.12.2013**
(21) Application number: 12185128.1
(22) Date of filing: 20.09.2012
(51) Int. Cl.: B62B 7/12, B62B 7/14, B62B 13/18

(54) **Child carriage**

(30) Priority: 20.09.2011 NL 2007446
(71) Applicant: R.A.J. Stolwerk Holding B.V., 4815 HL Breda (NL)
(72) Inventor: Stolwerk, Ronald Adrianus Johannes, 4715 AA RUCPHEN (NL)
(74) Representative: Hylarides, Paul Jacques

(57) **Abstract**

The application relates to a pushchair (1) for transporting one or more children over a ground surface, the pushchair (1) comprising:
- a support carriage (2) adapted for coupling one or more child' s seats (41) thereto;
- a set of slide elements (5) for mounting or mounted on the support carriage;
- a number of wheels (4) for mounting or mounted on the support carriage,
wherein the wheels (4) and/or the slide elements (5) can be mounted at different positions relative to each other on the support carriage (2) for the purpose of supporting the support carriage (2) on the ground surface either on the slide elements (5) or on the wheels (4).

The application also relates to an assembly of a pushchair (1) and one or more child's seats (41) for coupling thereto.

## Description

The present invention relates to a pushchair for transporting one or more children over a ground surface, the pushchair comprising a support carriage adapted for coupling one or more child's seats thereto in addition to a number of wheels for mounting or mounted on the support carriage.

Such pushchairs are generally known and available in numerous embodiments. They are generally constructed from a metal or plastic frame resting on three or four wheels. The frame is provided with a transport bar attached on one side of the pushchair in order to propel the pushchair over the ground surface. In determined types of pushchair use is made of a permanent, in principle non-removable child's seat in which a child can be seated. In other types of pushchair, for instance pushchairs with a seat which can also be used as car seat, it is possible to remove a child's seat from the frame and replace it with another seat. The child's seats are provided for this purpose with coupling elements with which the child's seat can be coupled to or uncoupled from the pushchair quickly and easily.

In order to make pushchairs better suited to different types of terrain (ground surface) pushchairs have been developed in which wheels of different dimensions are applied. Some pushchairs have for instance two large wheels on the rear side and two small wheels on the front side so that the pushchair can be easily pulled or pushed depending on the ground conditions. When the ground surface is however smooth, for instance when it is covered with snow and/or ice, such pushchairs no longer function properly either. The wheels will soon have no firm grip on the smooth surface, whereby the pushchair can slip. This is of course a particularly undesirable situation, particularly when children have actually been placed in the pushchair. In other cases, for instance when a relatively thick layer of snow lies on the ground surface, the pushchair gets stuck in the snow or a great deal of force must be exerted to move the pushchair through the snow.

A further drawback of the present pushchairs is that they are practically unsuitable or less suitable for the purpose of transporting a load such as luggage, shopping and the like. It is sometimes possible to carry a small quantity of load in a bag situated under the child's seat, but such stowage space is very limited.

It is an object of the present invention to provide a pushchair wherein at least one of the above stated drawbacks is obviated.

It is a further object of the invention to provide a pushchair which can be easily transported over different types of ground surface, in particular over a relatively smooth ground surface.

According to a first aspect of the present invention, this object is achieved in a pushchair of the type stated in the preamble, the pushchair comprising:
- a support carriage adapted for coupling one or more child's seats thereto;
- a set of slide elements for mounting or mounted on the support carriage;
- a number of wheels for mounting or mounted on the support carriage,
wherein the wheels and/or the slide elements can be mounted at different positions relative to each other on the support carriage for the purpose of supporting the support carriage on the ground surface either on the slide elements or on the wheels.

The pushchair can in this way be used on very diverse ground surfaces, wherein improved travel characteristics can be realized substantially irrespective of the ground conditions.

The pushchair can further comprise one or more coupling units with which one or more child's seats can be coupled releasably to the support carriage. In other embodiments the support carriage is however embodied for direct coupling of a child's seat thereto, i.e. without a coupling unit formed on the support carriage or coupled thereto. In a determined embodiment the support carriage comprises a number of tubular frame elements to which a coupling member of a child's seat can be directly coupled. An advantage of this embodiment can be that the support carriage, without the child's seat, can be given a flat form without the possible inconvenience of protruding parts such as a coupling unit. The flat support carriage makes the pushchair even better suitable for transporting load, for instance luggage, a beverage crate or similar flat container.

The support carriage can be embodied for a load in the form of a single child's seat and a quantity of luggage, although in other embodiments it is possible to couple two or more child's seats, adjacently and/or one behind another, to the support carriage.

In order to enable a rapid change in the position of the wheels, the wheels can be coupled releasably to the support carriage via a snap connection.

In order to improve the sliding characteristics of the pushchair the slide elements can be at least partially provided on their underside with a layer of polytetrafluoroethylene (PTFE) (Teflon). In order to prevent lateral sliding of the pushchair the slide element is provided over at least a part of its length with a protrusion for preventing lateral displacement of the support carriage.

The pushchair can be manufactured from any random suitable material. According to an embodiment the support carriage is manufactured substantially from metal, in particular aluminium. An exceptionally strong and relatively light construction (in the case aluminium is applied) can in this way be obtained. In other embodiments the support carriage is manufactured substantially from lightweight plastic material. In further embodiments a shell, preferably of sheet steel or other suitable (plastic) material, is arranged round a part of the frame or round the whole frame. This shell extends at least partially around the height adjusting means and the displacing means so that they are concealed from view. The shell further reduces the chance of injury to the user and/or the child on the support carriage, since the movable parts, such as for instance the height adjusting means, the displacing means and other parts, are covered by the shell.

The pushchair is preferably propelled using manual force. A push or pull bar formed on the support carriage or coupled thereto for pushing or pulling the support carriage forward can be provided for this purpose. The bar preferably takes a wholly or partially collapsible form so that the dimensions of the pushchair can be reduced after use. The support carriage can have an elongate load part onto which the bar can be folded down. In other embodiments the transport bar can be wholly removed from the support carriage.

In embodiments of the invention the wheels can be mounted releasably and at different heights on the support carriage. A high position of the wheels means a support by slide elements, while a low position of the wheels implies support by these wheels themselves. Additionally or alternatively, height adjusting means can be provided for displacing wheels between a high position, in which the support carriage rests on the slide elements, and a low position in which the support carriage rests on the wheels. The height adjusting means can comprise operating means, for instance a pedal or similar operating handle, for the purpose of operating the height adjusting means.

In a further embodiment the height adjusting means comprise a linkage which is mounted pivotally on the frame and to which the wheels can be attached. The rods of the linkage are coupled pivotally to each other and positioned relative to each other such that they can be displaced pivotally round the wheels to respectively the high and low position. In a particularly advantageous embodiment the linkage is embodied to cause all wheels to pivot simultaneously when a rod of the linkage is driven. In a further embodiment electric lifting means are provided for pivoting the linkage with wheels between the high and low position.

In a particularly advantageous embodiment use need only be made of a single lifting cylinder to cause simultaneous pivoting of all wheels. This means not only that the lifting means can be given a structurally simple and cost-effective form, but also that no special provisions need be made to synchronize the displacement of the wheels, which would indeed have to be made if two or more lifting cylinders were used. When the (plunger of the) lifting cylinder is extended, all wheels for instance move simultaneously downward and, when the (plunger of the) lifting cylinder is retracted, they all move simultaneously upward. The construction with the linkage operated by one lifting cylinder is preferably further embodied such that, during the displacement of the wheels between the high and low position, the flat loading surface of the support carriage remains essentially horizontal. This means that the load present on the pushchair (luggage and/or child) remains stable on the support carriage even when the wheels are displaced from the low position to the high position, and vice versa.

The lifting cylinder can take a powerful form such that the support carriage including load, i.e. including one or more child's seats (optionally with child) placed on the loading surface and/or including luggage, can be displaced between the high and low positions. This means that, during the changeover between displacement with the wheels and displacement with the slide elements, the load need not be removed from the loading surface.

Use can be made to propel the pushchair of the muscular strength of the person pushing the pushchair. In determined embodiments the propulsion can be realized or at least supported by driving one or more of the wheels with drive means, for instance with a combustion engine or electric motor. In a particularly advantageous embodiment the drive means comprise an electric hub motor provided on a wheel, preferably the single front wheel in the embodiment described below in which three wheels are applied.

In a determined embodiment of the invention the pushchair comprises:
- two rear wheels extending on either side of the support carriage;
- a single centrally arranged front wheel.

When the wheels are folded out and folded away, the rear wheels thus extend adjacently of the support carriage so that in collapsed position the height of the pushchair remains limited. The front wheel can further be accommodated wholly or partially in a receiving housing arranged centrally in the support carriage. The receiving housing makes it possible in the collapsed position to limit the dimensions of the pushchair in height direction.

The electric lifting means and/or the drive means can further be connected to one or more batteries. These batteries preferably take a replaceable form, whereby the range of the pushchair can be increased. Further provided are control means for controlling the electric lifting means and the electric drive means. The control means can for instance comprise electronic switching means (e.g. a microcontroller) for controlling the lifting means and drive means such that the height adjustment and/or the displacement can take place in controlled manner.

Further advantages, features and details of the present invention will be elucidated on the basis of the following description of several preferred embodiments thereof. Reference is made in the description to the accompanying figures, in which:
Figure 1 is a perspective side view of a first embodiment of a pushchair according to the invention with the wheels in the lower position;
Figure 2 shows the side view of figure 1 with the wheels in the higher position and with a coupled child's seat;
Figure 3 is a rear view of the embodiment of figure 1;
Figure 4 shows the rear view of figure 3 when the pushchair is placed on a sloping surface;
Figure 5 is a schematic side view in which the collapsibility of the transport bar is shown;
Figures 6 and 7 show respective side views of a further embodiment of the invention which is provided with a height adjusting mechanism for the wheels, wherein figure 6 shows the situation in which the wheels are located in the lower position and figure 7 shows the situation in which the pushchair rests on two slide elements;
Figure 8 is a perspective view of a further embodiment of the invention;
Figure 9 is a partially cut-away perspective view of the embodiment of figure 8 with the wheels in folded-down position;
Figure 10 shows a longitudinal section of the embodiment of figures 8 and 9; and
Figure 11 is a partially cut-away side view of the embodiment of figures 8-10 with the wheels in folded-up position.

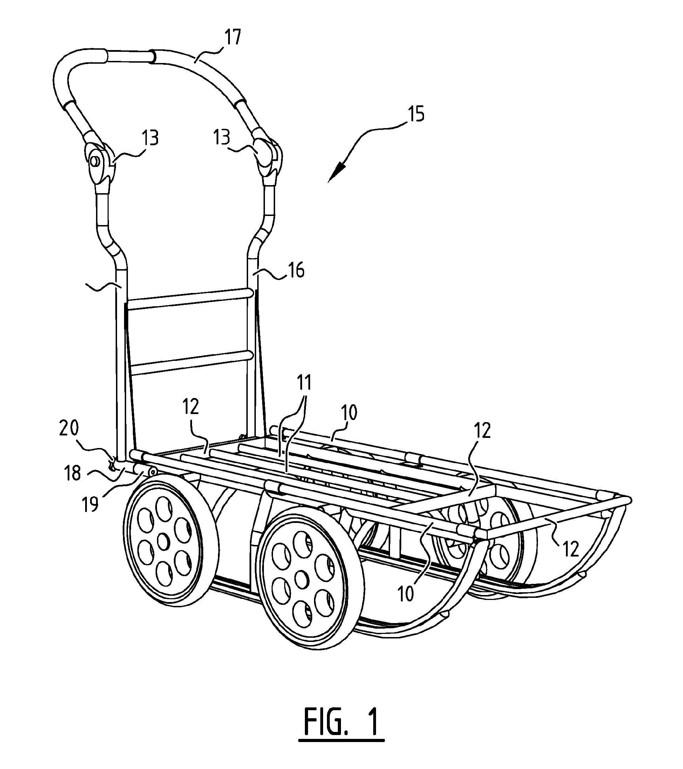

Figures 1-5 show a first embodiment of a pushchair 1 according to the invention. The pushchair is constructed from, among other parts, an elongate support carriage 2, a transport bar 17, a number of wheels 4 and a number of slide elements 5. Support carriage 2 comprises a frame constructed from, among other parts, a number of elongate outer support tubes 10, a number of inner tubes 11 and a number of transverse tubes 12. Tubes 10-12 together form a substantially flat transport surface on which a load can be arranged.

On the underside of the frame and on either side thereof are a number of uprights 6 on which slide elements or skis 5 are arranged. Slide elements 5 comprise an elongate, substantially straight part and a curved part on the front side of the pushchair. The curved part of a slide element is fixed to a support tube 10.

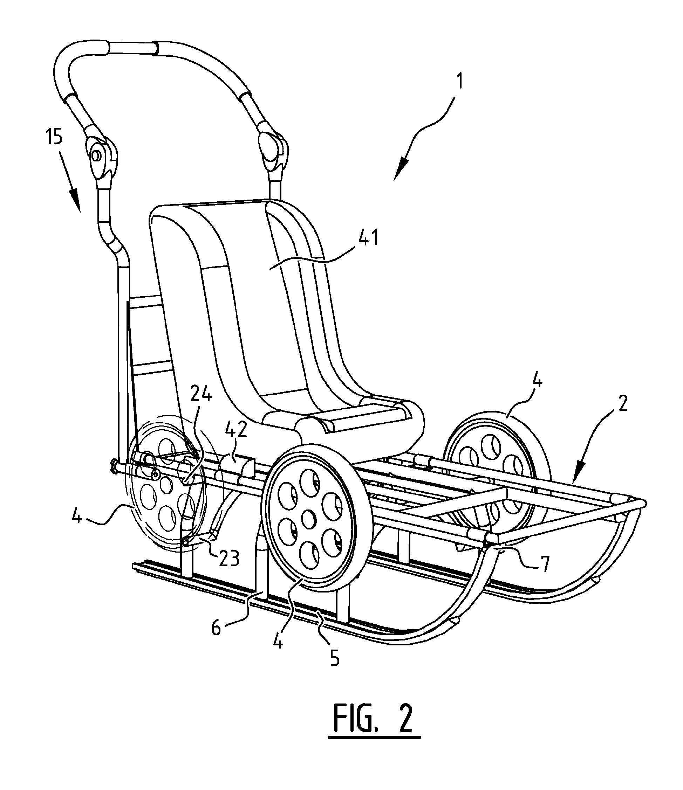

A number of wheels 4 (in the shown embodiment four wheels, although this number can also be larger or smaller) can further be coupled to the frame of the support carriage. Each of the wheels 4 can be mounted at two different heights on the frame. In the lower position of wheels 4 shown in figure 1 the frame rests via the wheels 4 on the ground surface. In this position the slide elements do not make contact with the ground surface. In the higher position of wheels 4 shown in figure 2 the wheels are situated some distance above the ground surface and the support carriage rests via slide elements 5 on the ground surface.

The wheels 4 coupled to the support carriage can be easily uncoupled in known manner from the support carriage. In the shown embodiment each of the wheels 4 is provided for this purpose with a hub which can be (releasably) coupled in known manner to an opening, provided on the underside of the frame, of a wheel mounting element provided on the frame. Shown in the figures is that a set of first wheel mounting elements 23 (i.e. four elements) are formed at a low position on the frame and a set of second wheel mounting elements 24 at a high position on the frame.

As stated above, in the position of the wheels shown in figure 2, in which the hub of a wheel is pushed into wheel mounting element 24, the pushchair rests on the ground surface with slide elements 5 and wheels 4 do not make contact with the surface. In this situation the pushchair is suitable for displacement over a relatively smooth ground surface or a snow-covered ground surface.

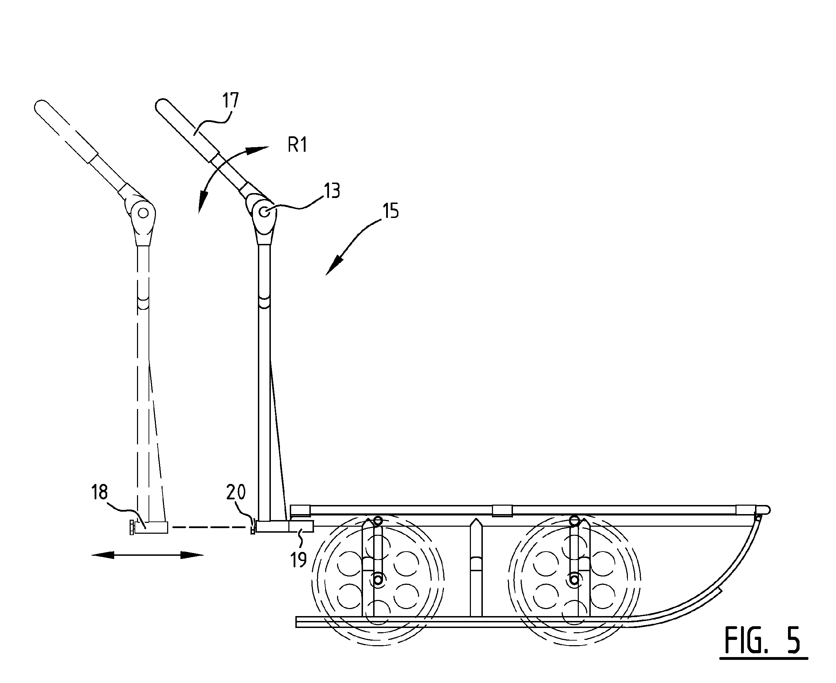

In order to enable pushing of support carriage 4, it is provided at one outer end with a push or pull bar 15. Bar 15 comprises two uprights connected with coupling parts 13 to a connecting element or connecting handle 17. Uprights 16 are further arranged on the outer end 19 of support carriage 2 using a sleeve 18. As shown in more detail in figure 5, it is possible to secure bar 15 to support carriage 2 using a locking mechanism 20. Bar 15 can also be released from support carriage 2 and stacked on the upper side of support carriage 2 so that the entity of support carriage and bar can be stowed away without taking up too much space. In order to save further space, connecting handle 17 can be pivoted using coupling part 13 (figure 5, R₁) so that the bar can be folded down in order to save space.

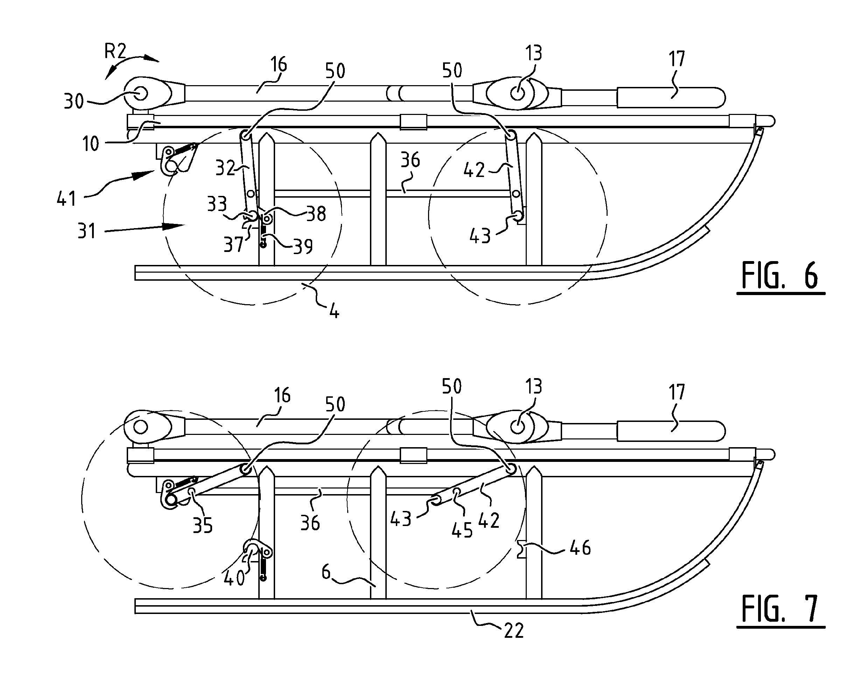

In other embodiments bar 15 cannot be directly disconnected from the support carriage, but the connection between bar 15 and support carriage 2 is formed by a hinge element. This hinge element ensures that the bar can be folded easily onto the support carriage and that the whole remains relatively compact. An example of such an embodiment is shown in figures 6 and 7. In this embodiment uprights 16 are arranged on the longitudinal tubes 10 of support carriage 2 using pivot elements 30. As shown in figure 6, the bar can be pivoted (R₂) so that the whole can be placed on top of the loading surface of the pushchair.

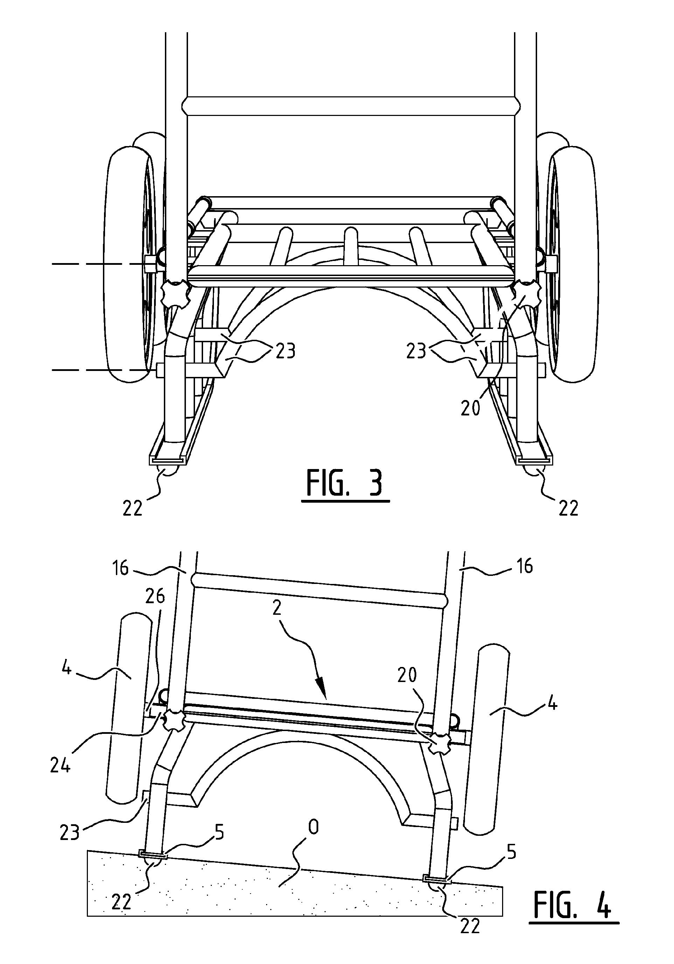

The undersides of slide elements 5 can take a substantially flat form. In other embodiments however, the undersides of slide elements 5 are provided with an elongate protrusion 22. As shown in figure 4, such a protrusion 22 can ensure that sliding of the pushchair in lateral direction is prevented, for instance when the pushchair is placed on an incline, while a displacement in longitudinal direction remains substantially unobstructed.

While figure 1 shows the situation in which the loading surface of support carriage 2 is completely free for arranging a load thereon, for instance luggage, crates of beverage and so on, figure 2 shows the situation in which the loading surface is at least partially being used for arranging a child's seat thereon. Child's seat 41 is provided for this purpose with coupling elements 42. In the shown embodiment coupling elements 42 can be coupled to the support tubes 10 so that a strong connection is effected between child's seat 41 and support carriage 2. In other embodiments (not shown) such coupling elements 42 can also be provided on the support carriage 2 itself or both the child's seat and the support carriage can be provided with coupling elements which together enable a good, releasable coupling between the child's seat and the support carriage. What is important is that child's seat 41 can be coupled firmly to the frame and can moreover be removed easily from the frame.

In the situation shown in figure 2 the child's seat 41 is arranged on a first portion of the loading surface of the support carriage, i.e. on the rear side thereof, so that on the front part of the entity a second child's seat can further be arranged and/or luggage can be placed on the front side.

In the shown embodiment seat 41 can be attached to support carriage 2 at a substantially random location as seen in longitudinal direction. In other embodiments however, the coupling elements are arranged only at fixed positions on support carriage 2 so that child's seat 41 can also only be coupled at several fixed positions to the support carriage.

In the embodiments discussed up to this point the height of the wheels can be adjusted by uncoupling the wheels one by one from the frame and coupling them fixedly to the frame again at another position. In the embodiment shown in figures 6 and 7 this is no longer necessary however, since this embodiment of the pushchair is embodied with a height adjusting mechanism.

Figure 6 shows the situation in which the wheels are situated in the lower position, while figure 7 shows the situation in which the wheels are situated in the higher position (wherein for the sake of clarity the wheels are shown only with broken lines). The adjusting mechanism for adjusting the two right-hand wheels is described below. The operation of the adjusting mechanism on the left-hand side of the pushchair is similar, and a detailed description thereof is therefore dispensed with for the sake of simplicity.

Rear wheel 4 is mounted with its axle on a pivot shaft 33 which can rotate in a pivotable arm 32. At its opposite outer end pivotable arm 32 is mounted on support carriage 2 via a shaft 50. Front wheel 4 is connected in similar manner via shaft 43 to a pivotable arm 42. Pivotable arm 42 is mounted on support carriage 2 via a further shaft 50. Pivotable arm 32 of the rear wheel and the corresponding arm 42 of the front wheel are mutually connected by a transverse rod 36. This transverse rod 36 is also arranged pivotally on each of the arms 32, 42.

Arms 32, 42 and 36 together form a parallelogram construction. This parallelogram construction makes it possible to adjust both wheels in the height in one movement by rotating the arms 32, 42 to the left or right. Two locking mechanisms are provided for the purpose of securing the wheels in the respective end positions (i.e. the high position and the low position). Provided on the underside is a locking mechanism with which shaft 33 of the wheel can be arranged in an opening 40 between a pivotally locked part 38 and a fixedly locked part 37. This displaceable locking part 38 forms a hook with which shaft 33 can be retained. Using the shown spring means 39 this hook remains in principle in the closed position so that the wheel remains secured in the shown lower position.

Arranged at a high position is a similar locking mechanism 41 for locking the shaft of the wheel in the upper position as shown in figure 7. The pushchair can hereby be moved quickly and easily from the one position to the other by unlocking the associated locking mechanism and pushing the rear wheels upward or downward. Unlocking of the respective locking mechanism can take place manually, although in other embodiments an operating mechanism (not shown in the drawing) is also provided with which the locking can be released for instance using the foot.

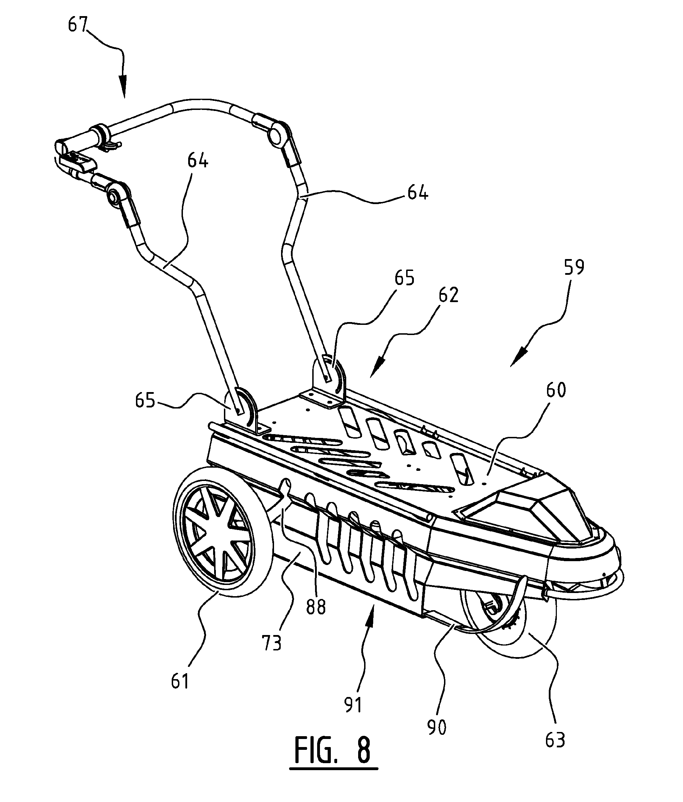

Referring to figures 8-11, a further embodiment of a pushchair according to the invention is shown. As shown in figure 8, the pushchair comprises a support carriage 59 on which three wheels 61, 62, 63 are mounted. In the shown embodiment the support carriage has two rear wheels 61,62 provided laterally of the support carriage and a front wheel 63 arranged centrally on the foremost part of the support carriage.

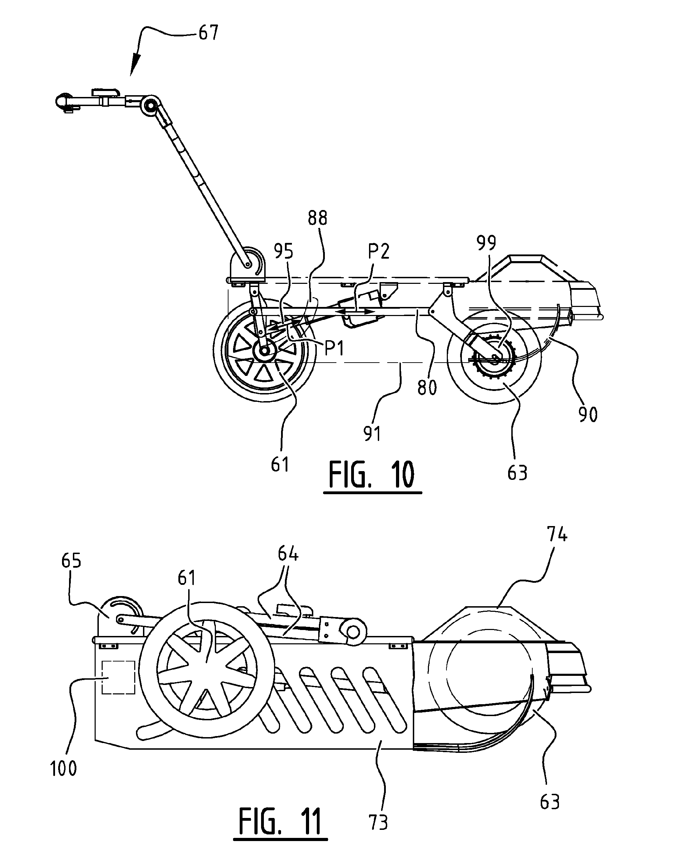

The support carriage comprises a frame 60 on the upper surface or loading surface on which two hinges 65 are formed. Uprights 64 of a transport bar 67 can be attached to the hinges. In figure 8 the transport bar is shown in the position of use, wherein it can be grasped by a user in order to push the support carriage 59 forward and/or steer it (when the support carriage is electrically propelled). In figure 11 the transport bar is positioned folded down onto the loading surface of the support carriage.

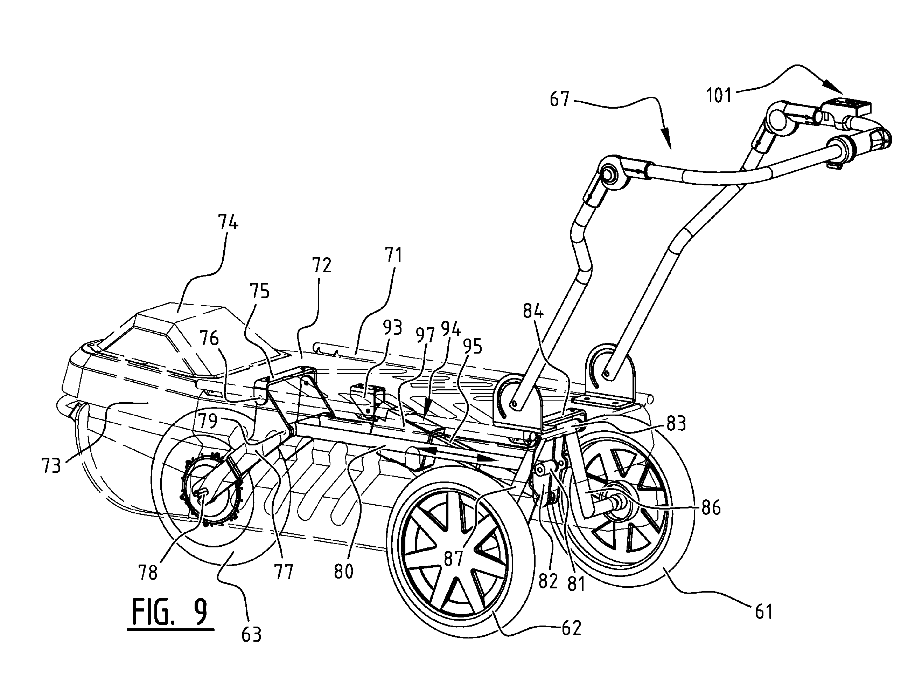

Referring to (particularly) figure 9, frame 60 further comprises a number of longitudinal girders 70, 71 on which a steel shell is arranged. The steel shell comprises a flat upper part 72 (also referred to here as the loading surface) and a part 73 depending on either side. The shell provides protection for the internal parts of the support carriage and substantially only the wheels 61, 62 protrude laterally relative to the shell.

Arranged in the shell are a number of elongate openings which have the main purpose of reducing the weight of the shell. An elongate slot 88 which curves to some extent is further arranged in each of the depending parts 73. This slot 88 forms a guide opening along which the shafts of wheels 61, 62 can be displaced when the wheels are folded upward or downward.

The lower edge of the depending parts 73 is bent to some extent and hereby forms slide surfaces 91 over which the pushchair can slide when the wheels are folded upward. At the front the slide surfaces 91 continue into the slide surfaces of two curved strips 90 attached to the depending parts 73.

An embodiment of the height adjusting means for displacing wheels 61-63 upward or downward is shown in more detail in figures 9 and 10. A front bracket 75 is attached to frame 60. This bracket 75 is mounted on an L-shaped arm 77 using hinges 76. Hinges 76 are mounted here on a first outer end of arm 77, while hinges 78 are provided on the opposite outer end of L-shaped arm 77 for rotatably receiving the axle of wheel 63. The L-shaped arm 77 can be rotated around hinges 76 in order to displace wheel 63 between the downward folded position shown in figures 9 and 10 and the folded-away position shown in figure 11. In the folded-away position at least a part of wheel 63 is accommodated in a receiving housing 74 of frame 60 so that the wheel is well protected in this position.

A second support component 84 is arranged on the rear part of frame 60. A shaft 83 is mounted rotatably in this support 84. Two parallel arms 82 are formed on shaft 83. Provided roughly in the middle of these arms is a hinge 81, while a further hinge 82 is arranged on the outer end of arms 82 which lies opposite shaft 83. Further provided on shaft 83 are two arms 87 and 86 oriented laterally outward to some extent. These arms are substantially L-shaped, wherein a wheel 61, 62 is arranged on each short outer end of an arm. Wheels 61, 62 can be pivoted upward or downward by rotating the arms 82 over shaft 83.

A coupling arm 80 is mounted pivotally between the two pivoting constructions. The coupling arm is more particularly attached at the one outer end to hinges 79 of L-shaped arm 77 with which front wheel 63 can be pivoted, while at the opposite outer end coupling arm 80 is attached to the parallel arms 82 with which rear wheels 61, 62 can be pivoted. Coupling arm 80 ensures that a pivoting movement of one of the front arms 77 or rear arms 82 is likewise performed by the other arms 77, 82.

Finally, a third bracket 93 is arranged at a position between bracket 75 and bracket 84. A drive 94 for the height adjustment can be fixed to this bracket. In the shown embodiment drive 94 is mounted between bracket 93 and the lower outer end of arms 82 and can pivot relative to the bracket and said arms 82. Drive 94 comprises a lifting cylinder 97 in which a plunger 95 can be reciprocally displaced.

The distance between support 93 and the lower outer end of arms 82 can be varied (direction P₁; figure 10) by operating lifting cylinder 97. When the distance is for instance made larger by extending the plunger 95, rear wheels 61, 62 are pivoted downward from the folded-away position shown in figure 11 to the downward folded position shown in figure 10. Because arms 82 are connected via the above described coupling arm 80 to the mounting of the front wheel, coupling arm 80 will be displaced in forward or rearward direction (P₂, figure 10) when cylinder 95 is extended. When the cylinder is extended the element 80 displaces to the rear, this having the result that the L-shaped rod 77 and the front wheel 63 mounted thereon are moved to the rear from the folded-away position shown in figure 11 to the folded-out position shown in figure 10. When the cylinder is retracted the wheels return to the folded-away position.

In embodiments of the invention the drive 94 comprises an electrical, pneumatic and/or hydraulic lifting cylinder. An electric lifting cylinder is powered by one or more batteries 100 situated (and shown only schematically) on the rear side of the pushchair (figure 11). The batteries are also applied to provide the control circuits of possible pneumatic and/or hydraulic lifting cylinders with electric power.

Drive 94 can be operated using an operating element 101 on transport bar 67 so that the user can easily fold the wheels downward or upward. In a preferred embodiment of the invention the drive for the height adjustment takes a powerful form such that the wheels can be folded in and out while a load, for instance a child's seat with child (with a weight of more than 30 kg or even more than 100 kg) is mounted at the same moment on the loading surface of the frame.

Further shown in figure 9 is that front wheel 63 is provided with an electric drive 99 for propelling the pushchair over a ground surface. In the shown embodiment the electric drive comprises an electric hub motor which drives the hub of wheel 63. The power supply to electric drive 99 can be the same battery 100 also used as power supply for driving the height adjustment of the wheels.

Electric motor 99 can be operated by the user using the above-mentioned control 101. In some embodiments it is possible to propel the device manually (for instance with motor 99 switched off) as well as to drive the device using the motor. It is further possible in determined embodiments to use motor 99 only as auxiliary motor, wherein the user can additionally increase or decrease the speed of the device by pushing against or pulling on the transport bar.

In the shown embodiments the drive of wheels 63 is only suitable for transporting the device when the wheels are folded downward. When the wheels are folded upward and the pushchair is used as sledge, there is no driving. In determined embodiments however, means (not shown) can be provided with which the device can also be propelled when used as sledge.

In embodiments of the invention as shown in figures 8-11 the flat loading surface of the support carriage is also embodied on the one hand to arrange one or more child's seats thereon and on the other to provide space for fastening another load thereto, such as luggage and the like. The loads can be attached at any random position to the loading surface subject to the wishes of the user. Use is preferably made here of snap connections so that the load can be attached quickly and securely to the support carriage or be released therefrom.

The present invention is not limited to the embodiments thereof described herein. The rights sought are rather determined by the following claims, within the scope of which numerous modifications and adaptations can be envisaged.

## Claims

**1.** Pushchair for transporting one or more children over a ground surface, the pushchair comprising:
- a support carriage adapted for releasable coupling of one or more child's seats thereto;
- a set of slide elements for mounting or mounted on the support carriage;
- a number of wheels for mounting or mounted on the support carriage,
wherein the wheels and/or the slide elements can be arranged relative to the support carriage at different positions relative to each other for the purpose of supporting the support carriage on the ground surface either on the slide elements or on the wheels, wherein the support carriage comprises a frame with a substantially flat loading surface, wherein the loading surface comprises a first loading part and a second loading part and wherein either a child's seat or an individual load can be arranged on each of the loading parts.

**2.** Pushchair as claimed in claim 1, wherein the frame is embodied for the purpose of arranging child's seats thereon at different positions, preferably at continuously variable positions.

**3.** Pushchair as claimed in any of the foregoing claims, wherein the slide elements are at least partially provided on their underside with a layer of polytetrafluoroethylene (PTFE) (Teflon).

**3.** Pushchair as claimed in any of the foregoing claims, wherein a slide element is provided over at least a part of its length with a protrusion for preventing lateral displacement of the support carriage.

**4.** Pushchair as claimed in any of the foregoing claims, wherein the support carriage is manufactured substantially from metal, in particular aluminium, and/or wherein a shell of sheet steel is arranged round the frame.

**5.** Pushchair as claimed in any of the foregoing claims, wherein the wheels can be mounted releasably and at different heights on the support carriage.

**6.** Pushchair as claimed in any of the foregoing claims, comprising height adjusting means for displacing wheels between a high position, in which the support carriage rests on the slide elements, and a low position in which the support carriage rests on the wheels.

**7.** Pushchair as claimed in claim 6, wherein the height adjusting means comprise:
- a linkage which is mounted pivotally on the frame and to which the wheels can be attached, wherein the rods are pivotable for the purpose of arranging the wheels in respectively the high and low position;
- electric lifting means for pivoting the linkage with wheels between the high and low position.

**8.** Pushchair as claimed in claim 7, wherein the lifting means comprise a single lifting cylinder which is attached with a first outer end to the frame and with the other outer end to the linkage and/or wherein the lifting cylinder is embodied to displace the support carriage including load between the high and low position.

**9.** Pushchair as claimed in claim 6, 7 or 8, wherein the height adjusting means are adapted to adjust all wheels simultaneously in the height and/or wherein the height adjusting means are embodied to hold the flat loading surface essentially horizontal during the displacement of the wheels between the high and low position.

**10.** Pushchair as claimed in any of the foregoing claims, comprising drive means for driving at least one of the wheels, wherein the drive means preferably comprise an electric hub motor provided on at least one of the wheels for driving thereof.

**11.** Pushchair as claimed in any of the foregoing claims, comprising:
- two rear wheels extending on either side of the support carriage;
- a single centrally arranged front wheel,
wherein the pushchair is preferably embodied such that in the high position the rear wheels extend adjacently of the support carriage and the front wheel extends in a receiving housing centrally in the support carriage.

**12.** Pushchair as claimed in any of the foregoing claims, comprising an exchangeable battery connectable to the electric lifting means and/or the drive means.

**13.** Pushchair as claimed in any of the claims 7-12, comprising control means for controlling the electric lifting means and the electric drive means.

**14.** Assembly of a pushchair as claimed in any of the foregoing claims and at least one child's seat for coupling to the support carriage thereof.

**15.** Use of a pushchair as claimed in any of the claims 1-14.
